# EUROPEAN PATENT SPECIFICATION

(11) **EP 2 501 058 B1**
(45) Date of publication and mention of the grant of the patent: **24.10.2018**
(21) Application number: 09852435.8
(22) Date of filing: 22.12.2009
(51) Int. Cl.: H04Q 11/00, H04B 10/272

(54) **DEVICE FOR OPTICAL NETWORK UNIT INTEGRATION**
VORRICHTUNG ZUR INTEGRATION EINER OPTISCHEN NETZWERKEINHEIT
DISPOSITIF POUR INTÉGRATION D'UNITÉS DE RÉSEAU OPTIQUE

(43) Date of publication of application: 19.09.2012
(73) Proprietor: ZTE Corporation, Shenzhen, Guangdong 518057 (CN)
(72) Inventor: WU, Chunhua, Shenzhen Guangdong 518057 (CN); GUO, Han, Shenzhen Guangdong 518057 (CN); LOU, Bengang, Shenzhen Guangdong 518057 (CN)
(74) Representative: J A Kemp
(86) International application number: PCT/CN2009/075828
(87) International publication number: WO 2011/075885

(56) References cited:
- CN-A- 101 188 502
- CN-A- 101 277 320
- CN-A- 101 472 202
- JP-A- 2007 142 529
- US-A1- 2009 263 130
- "Gigabit-capable Passive Optical Networks (G-PON): Transmission convergence layer specification; G.984.3 (03/08)", ITU-T STANDARD, INTERNATIONAL TELECOMMUNICATION UNION, GENEVA ; CH, no. G.984.3 (03/08), 29 March 2008 (2008-03-29), pages 1-146, XP017588388, [retrieved on 2009-04-24]

## Description

### Technical Field

The present invention relates to the PON (passive optical network) transmission technology in the communication field, and particularly, to an apparatus for integrating an ONU (Optical Network Unit) in a GPON (Gigabit Passive Optical Network).

### Background of the Related Art

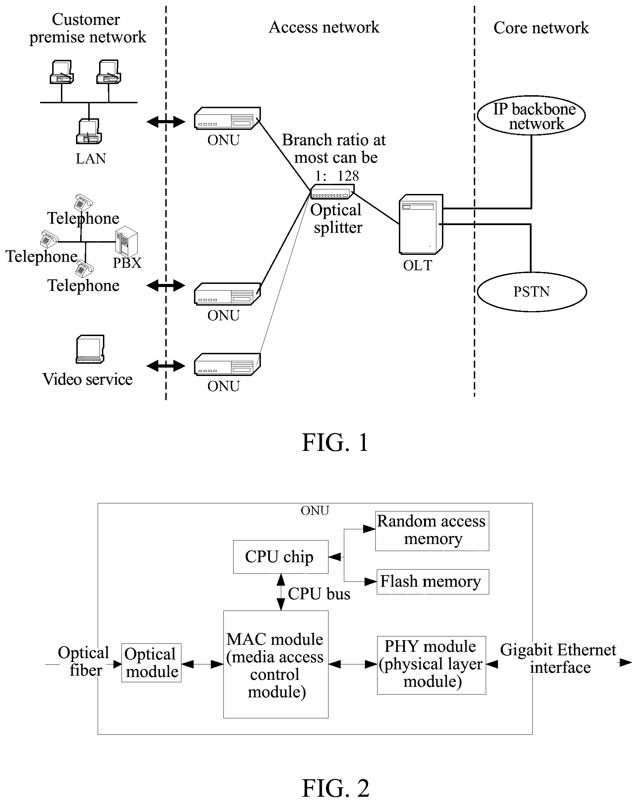

The GPON technology has the advantages such as high bandwidth, high efficiency, large coverage, rich user interfaces and so on and it is viewed by most operators as an ideal technology for realizing access network service bandwidth comprehensive reform. It is composed of OLTs (Optical Line Terminal) at the office end, ONTs/ONUs (Optical Network Terminal or Optical Network Unit) at the user end and ODNs (Optical Distribute Network). The network topology of GPON is as shown in FIG. 1. The main function of the OLT in the GPON system is to complete the access control and service processing of each ONU, such as upstream bandwidth allocation, framing and de-framing of GTC (GPON Transmission Convergence) frames, state control of ONU, etc. The main function of ODN is to complete the physical connection from OLT to ONU. ONU is mainly to complete the GTC framing and de-framing of user data.

What is provided by GPON is an asymmetric access. In the downstream direction thereof, the OLT carries out data transmission in the manner of broadcast, and each ONU cuts the GEM (GPON Encapsulation Method) frames belonging to itself and completes the reassembly of the data, and at the same time, the OLT also needs to send the bandwidth allocation information of each ONU to each ONU. In the downstream direction, the payload portion of GEM can be encrypted according to the Port-ID (Port Identifier), so as to ensure the information confidentiality between downstream ONUs. In the upstream direction, each ONU completes its own data transmission and bandwidth request reporting at the specified time, and completes the multiplexing from a plurality of optical fibers connected to the ONU to a single optical fiber connected to the OLT at the optical splitter of the ODN.

All the information about GPON is encapsulated in the GTC frame. The structures of the upstream and downstream directions of the GTC frame are different. In the downstream direction, the length of the GTC frame is fixed to 125 µs (38880 bytes), and its frame includes PCBd (Physical Control Block downstream) and payload portion. PCBd includes a PSync (Physical Synchronization) domain, an Ident (Identifier) domain, a PLOAMd (Physical Layer OAM downstream) domain, a BIP (Bit Interleaved Parity) domain, a PLEND (Payload Length downstream) domain and an Upstream BWMAP (Upstream Bandwidth Map, abbreviated as BWMAP hereinafter) domain; and the payload portion is composed of one or more GEM frames. In the upstream direction, the length of the GTC frame is variable, and its particular length is allocated by the OLT. The GTC upstream frame is mainly composed of a Preamble (used for an optical module carrying out clock extraction) domain, a Delimiter (for frame delimitation) domain, a BIP (Bit Interleaved Parity) domain, an ONU-ID (ONU Identifier) domain, an Ind (Indication, used for indicating the state of the ONU and including whether the forward error correction is enabled and so on) domain, a PLOAMu (Physical Layer OAM upstream) domain, a DBRu (Dynamic Bandwidth Report upstream) domain and a Payload (message payload) domain. Regardless of downstream GTC frame or upstream GTC frame, the GEM frame in its frame payload portion is composed of a GEM frame header and a GEM payload. The GEM frame header is composed of a PLI (Payload Length Indicator) domain, a Port-ID domain, a PTI (Payload Type Indicator) domain and a HEC (Head Error Control) domain; wherein the PLI indicates the length of the GEM payload segment after the GEM frame header in the unit of byte; Port-ID is used for indicating 4096 different traffic streams of the PON; PTI is used for indicating the content type of the GEM payload and the corresponding processing manner; and the HEC provides the error check and error correction functions of the frame header and provides the delimitation function of the GEM frame together with the PLI.

In the current market, the architecture of an ordinary GPON ONU is as shown in FIG. 2. In such architecture, the MAC (Media Access Control) module completes the processing of the user access portion, including the GTC framing and de-framing of the user data and DBA (Dynamic Bandwidth Allocation) reporting and so on, and its implementation follows the G.984.3 standard; CPU (Center Process Unit) completes the control and management of ONU; and PHY (Physical Layer) module completes the functions required to be realized by the physical layer of the Ethernet.

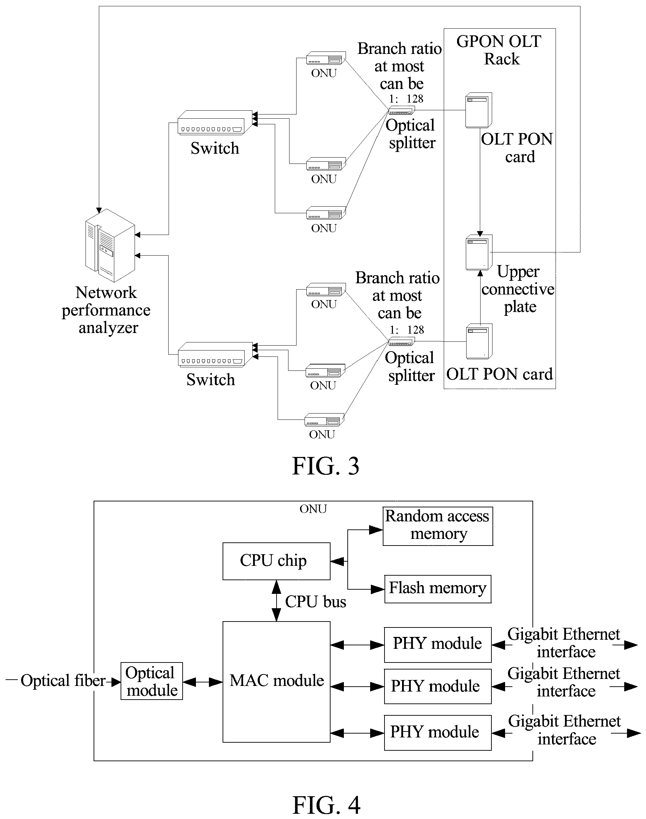

By way of the existing ONU structure, during the test of the conventional GPON system, if it is required to carry out full load testing on the device at a single OLT end, up to 128 ONUs and 1 ODN network and numerous optical fibers are required. It costs significant money and time to form such a full load environment. Assuming that it is required to test the full load of the entire rack with GPON OLT boards being inserted, the number of the required ONUs, ODNs, optical fibers, switches and network performance testers is almost unacceptable. However, at present, the worldwide operators in high level usually are required to carry out full load testing in rack level so as to check the switch ability of the OLT rack provided by the device providers, which brings huge pressure on the devices and money of the device providers. The network topology of the conventional GPON system test is as shown in FIG. 3.

### Summary of the Invention

In view of this, the object of the present invention is to provide a method and apparatus for integrating an optical network unit, for solving the existing technical problems that it is difficult to carry out networking in the GPON system testing and the cost is high.

In order to achieve the object of the present invention, the technical solution proposed by the present invention is as follows:
an apparatus for integrating an optical network unit, comprising:
a line decoding and physical control block downstream (PCBd) processing module for receiving downstream optical port data from an optical module; providing a frame header indicator to an upstream gigabit passive optical network transmission convergence (GTC) frame sending control module; submitting an upstream bandwidth map (Upstream BWMAP) domain to a bandwidth map (BWMAP) processing module; submitting a physical layer OAM downstream (PLOAMd) domain to an optical network unit (ONU) state management module; and submitting a GTC frame payload portion, length information about the PCBd and superframe counting to a downstream GTC frame payload processing module;
a downstream GTC frame payload processing module for completing the filtering and decryption of a gigabit passive optical network encapsulation method (GEM) frame according to a port identifier (Port-ID) filter list, Port-ID encryption enable list and Port-ID key list provided by the ONU state management module; completing separation of user data and management information according to a Port-ID attribute list provided by an external parallel bus interface module; completing Ethernet message reassembly for the Port-ID of each ONU; and completing the sending of an Ethernet message according to a mapping list from Port-ID to hardware interface provided by a central processing unit (CPU) via the external parallel bus interface module;
the ONU state management module for responding to a physical layer OAM downstream (PLOAMd) message and maintaining the state information about each ONU; responding to an ONU discovery register application of the BWMAP processing module and generating a physical layer OAM upstream (PLOAMu) domain to send to a upstream GTC framing module; completing the configuration of a bandwidth allocation identifier (Alloc-ID) filter list, a mapping list from Alloc-ID to ONU identifier (ONU-ID), an equalization delay (EqD) list between optical line terminal and ONU, the Port-ID encryption enable list, the Port-ID key list, and the Port-ID filter list according to the PLOAMd message;
the BWMAP processing module for completing the processing of the Upstream BWMAP domain of each ONU; filtering the BWMAP domain not belonging to the present system according to the Alloc-ID filter list provided by the ONU state management module; acquiring GTC frame control information to be sent to the upstream GTC framing module according to the mapping list from Alloc-ID to ONU-ID and the EqD list provided by the ONU state management module; initiating an ONU discovery register application to the ONU state management module; initiating an application of generating a dynamic bandwidth report upstream (DBRu) domain to an upstream Ethernet message queue management module; and initiating a GEM framing application to an upstream GEM framing module;
an upstream Ethernet message processing module for completing the reception of an Ethernet message from each gigabit Ethernet interface, acquiring the Port-ID and Alloc-ID of this message according to the CPU configuration information sent by the external parallel bus interface module, and applying to the upstream Ethernet message queue management module for message enqueue according to the Alloc-ID;
the upstream Ethernet message queue management module for completing the queue management of each upstream Alloc-ID; completing the generation of the DBRu report when the BWMAP processing module applies for the DBRu report; and processing the enqueue application of an ONU management and control interface (OMCI) message inserted by the external parallel bus interface module;
the upstream GEM framing module for completing the GEM framing according to the length information about the GEM frame domain given by the BWMAP processing module;
the upstream GTC framing module for completing the framing processing of the GTC frame according to the GTC frame control information and PLOAMu message of the ONU state management module given by the BWMAP processing module;
the upstream GTC frame sending control module for sending a upstream GTC frame according to the clock and superframe counting given by the line decoding and PCBd processing module;
the external parallel bus interface module for providing an interface to an external CPU chip; and providing a query interface for reading the state of each ONU to the CPU; and
the gigabit Ethernet interface module for completing the message reception and transmission of the gigabit Ethernet interface of each ONU.

Furthermore, the ONU state management module comprises:
a PLOAMd check and filtering module for completing the check and filtering of the downstream PLOAMd domain and submitting the filtered PLOAMd domain to the PLOAMd domain processing module for management;
the PLOAMd domain processing module for completing the feedback of the PLOAMd domain and completing the initiation of state migration application to an ONU state storage module;
the ONU state storage module for completing the storage of state of each ONU; completing the state migration of each ONU according to the state migration application of the ONU; and starting a timer management module according to the new and old state of the migration;
the timer management module for completing the ranging state monitoring and suspended state monitoring of each ONU; and
a PLOAMu generation module for responding to the ONU discovery register application initiated by the BWMAP processing module and generating a suitable PLOAMu domain to be sent to the upstream GTC framing module.

Furthermore, the downstream GTC frame payload processing module comprises:
a GEM frame delimitation module for the search and delimitation of the GEM frame of the payload portion of the downstream GTC frame;
a GEM frame filtering module for filtering the GEM frame not belonging to the present system according to the Port-ID filter list provided by the ONU state management module;
a GEM frame decryption module for carrying out GEM frame decryption according to the Port-ID encryption enable list and Port-ID key list provided by the ONU state management module;
a GEM frame Port-ID judgment module for completing the separation of user data and management information according to the Port-ID attribute list provided by the CPU via the external parallel bus interface module; sending the management information to the CPU for processing via the external parallel bus interface module; and sending the user data to a GEM frame message reassembly module for processing;
the GEM frame message reassembly module for carrying out Ethernet message reassembly on the user data in the unit of Port-ID; and
a message hardware port acquisition module for looking up the destination gigabit Ethernet interface module corresponding to the Port-ID of the message according to the mapping list from Port-ID to hardware interface provide by the CPU via the external parallel bus interface module, and sending out the Ethernet message via the corresponding destination gigabit Ethernet interface module.

Furthermore, the BWMAP processing module is further used for calculating whether the bandwidth allocation of each ONU is allocated continuously, if continuous, then indicating that the upstream GTC framing module doesn't need to send the PLOu domain within the upstream GTC frame corresponding to the second Upstream BWMAP domain.

Furthermore, the upstream Ethernet message queue management module comprises:
an enqueue module for receiving the message content, message Port-ID and message Alloc-ID sent by the upstream Ethernet message processing module and the OMCI message enqueue application sent by the external parallel bus interface module to carry out an enqueue operation;
a message storage module for the storage management of the enqueued message, wherein the message storage module carries out the storage of the message content via an external storage chip and identifies that the content of the message information is stored in the queue.

A queue statistics module for counting up the total number of bytes of the message stored in each queue;
a DBRu generation module for, after having received the DBRu application sent by the BWMAP processing module, generating a DBRu report according to a statistics result of the queue statistics module, and sending the DBRu report to the upstream GTC framing module; and
a dequeue module for acquiring the message content via the message storage module according to a message dequeue application sent by the upstream GEM framing module and carrying out dequeue according to the statistics result of the queue statistics module.

Furthermore, the upstream GTC framing module comprises:
a GTC framing unit for reading the PLOAMu domain, DBRu domain and upstream GEM frame according to the GTC control information of the BWMAP processing module, and adding a PLOu domain to complete the framing of the upstream GTC frame;
a BIP calculation storage unit for generating and storing the bit interleaved parity (BIP) of each upstream GTC frame; and
a FEC encoding unit for carrying out forward error correction encoding of the upstream GTC frame and sending the encoded GTC frame to the upstream GTC frame sending control module.

Furthermore, if the information given by the BWMAP processing module indicates that the timeslot of the next Alloc-ID and the timeslot of the present Alloc-ID are connected to each other, then the upstream GTC framing module is also used to read the DBRu domain and GEM frame for the timeslot of the next Alloc-ID but no longer need to generate the PLOu domain.

Furthermore, the CPU reads the state of each ONU from the ONU state management module via the external parallel bus interface module; the upstream Ethernet message processing module reads an acquisition rule list of Alloc-ID and Port-ID stored by the CPU via the external parallel bus interface module and acquires the Port-ID and Alloc-ID to which the message belongs according to this list.

Furthermore, the CPU is integrated with the external parallel bus interface module.

In the present invention, the functions of a plurality of ONU units are integrated into one ONU integration apparatus and supporting up to 128 ONU units can be achieved on a single chip by simulation. In conjunction with the present invention and the corresponding CPU software system, when carrying out full load testing on the OLT device, the PON port of each OLT only needs 1 device to simulate the full load configuration. By using the present invention to carry out test, ONUs, ODNs, switches and a large number of optical fibers can be saved, thereby reducing the testing cost, simplifying the testing network structure, and improving the testing efficiency.

The document US2009263130A1 describes an apparatus about gigabit passive optical network transmission convergence extension for next generation access.

### Brief Description of Drawings

FIG. 1 is a network topological structure diagram of a GPON;
FIG. 2 is a structure diagram of an ordinary GPON ONU system;
FIG. 3 is a network topology when a conventional GPON system carries out full load testing on an OLT device;
FIG. 4 is a schematic diagram of the physical structure of an ONU integration apparatus in the present invention;
FIG. 5 is a logic schematic diagram of an ONU integration apparatus in the present invention realizing the integration of a plurality of ONU units;
FIG. 6 is a network topology when an ONU integration apparatus in the present invention is used to carry out full load testing on an OLT device;
FIG. 7 is a block diagram of the module functions of an MAC module of an ONU integration apparatus in the present invention;
FIG. 8 is a functional block diagram of an ONU state management module in an MAC module of an ONU integration apparatus in the present invention;
FIG. 9 is a functional block diagram of a downstream GTC frame payload processing module in an MAC module of an ONU integration apparatus in the present invention;
FIG. 10 is a functional block diagram of a BWMAP processing module of an MAC module of an ONU integration apparatus in the present invention;
FIG. 11 is a functional block diagram of an upstream Ethernet message queue management module in an MAC module of an ONU integration apparatus in the present invention;
FIG. 12 is a functional block diagram of an upstream GTC framing module in an MAC module of an ONU integration apparatus in the present invention; and
FIG. 13 is a diagram of the connection relationships between an external parallel bus interface module and other modules in an MAC module of an ONU integration apparatus in the present invention.

### Preferred Embodiments of the Present Invention

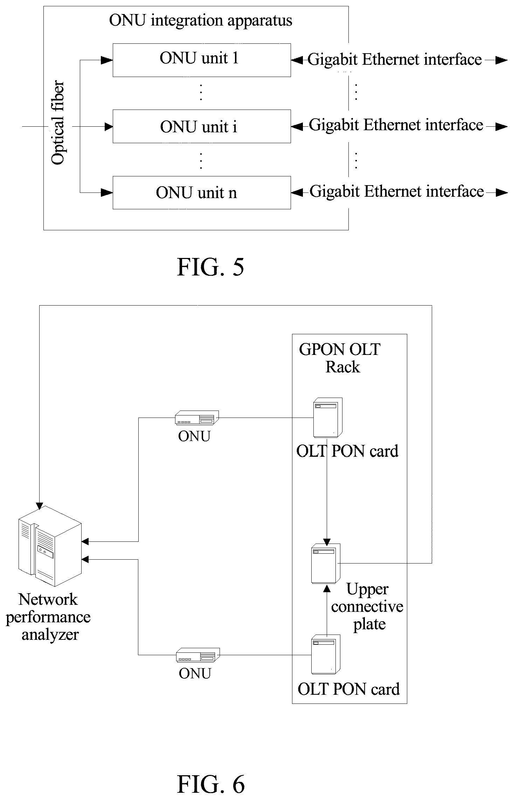

The basic concept of the present invention is to reform the existing ONU structure, integrate the functions of up to 128 ONUs into one ONU, and at the same time provide up to 128 gigabit Ethernet interface modules. The schematic diagram of the physical structure of the ONU integration apparatus in the present invention is as shown in FIG. 4, and in the present invention, the MAC module is redesigned to be able to process the multiple ONU data so that the ONU integration apparatus in the present invention can be integrated with a plurality of ONU units, and the schematic diagram of the logic structure of the ONU integration apparatus in the present invention realizing the integration of a plurality of ONU units is as shown in FIG. 5. When using the integrated ONU structure in the present invention to test the conventional GPON system, its effects are quite apparent, and as shown in FIG. 6, when carrying out full load testing on the device with a single OLT end, it only requires to connect one integrated ONU and only one optical fiber is needed to access the OLT, saving the intermediate ODNs and a large number of optical fibers.

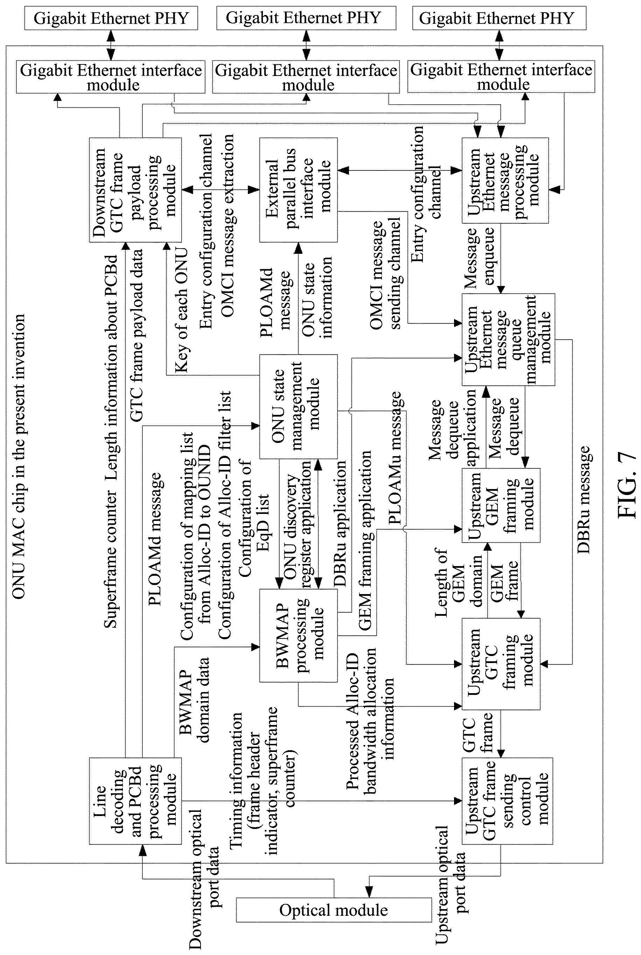

FIG. 7 is a structure diagram of an MAC module in an ONU integration apparatus in the present invention, and the apparatus comprises:

### (1) a line decoding and physical control block downstream (PCBd) processing module

The module receives downstream optical port data from an optical module, completes the alignment of the downstream GTC frame, the decoding of the line encoding, the FEC (Forward Error Correction) decoding of the data, the synchronization of the downstream frame counter, the check of BIP and completes the distribution of each data domain. The implementation of each function can refer to the G984.3 standard.

The module is further used for providing a 8 KHz frame header indicator to an upstream GTC frame sending control module and for determining the upstream sending time for the upstream GTC frame sending control module.

The module is further used for submitting all the upstream bandwidth map (Upstream BWMAP) domains in the downstream GTC frame to the BWMAP processing module for processing.

The module is further used for submitting a physical layer OAM downstream (PLOAMd) domain in the downstream GTC frame to the ONU state management module for processing.

The module is further used for forwarding the payload portion of the GTC frame to a downstream GTC frame payload processing module for processing and at the same time it is also required to provide the length information and superframe counting about the PCBd to the downstream GTC frame payload processing module. The length information and superframe counting about the PCBd will be used by the downstream GTC payload processing module to carry out decryption processing on the GTC payload.

### (2) ONU state management module

The module is used for the registration of each ONU, state information maintenance, response of the corresponding physical layer OAM downstream (PLOAMd) domain and the state migration of each ONU, and it completes the configuration of each entry according to the PLOAMd domain, and the entry configuration includes:
a) an Alloc-ID (Allocation Identifier) filter list, which is used for the BWMAP processing module filtering the upstream bandwidth map (Upstream BWMAP) domain of the Alloc-ID which is not managed by the present system;
b) a mapping list from Alloc-ID to ONU-ID, which is used for the BWMAP module querying the ONU-ID according to the Alloc-ID.
c) a Port-ID filter list, which is used for the downstream GTC frame payload processing module filtering the GEM frame of the Port-ID which doesn't belong to the present system.
d) a Port-ID (Port Identifier) encryption enable list, wherein the Port-ID is used for identifying an actual physical port or a message stream with a certain feature on the ONU, and the list along with a Port-ID key list is used for the downstream GTC frame payload processing module completing the decryption of the GEM frame corresponding to each Port-ID.
e) the Port-ID key list, which along with the Port-ID encryption enable list is used for the downstream GTC frame payload processing module completing the decryption of the GEM frame corresponding to each Port-ID.
f) an EqD (Equalization Delay between OLT and ONU) list, which is used for the BWMAP processing module querying the equalization delay between the ONU corresponding to each ONU-ID and the OLT according to the ONU-ID.

This module further needs to respond to the ONU discovery register application given by the BWMAP processing module in addition to completing the configuration of each entry. Assuming that the BWMAP processing module gives out an application, this module needs to query the state of each ONU of the present system to obtain the device number of the first unregistered ONU and then generates a PLOAMu message of register response for the upstream GTC framing module. Assuming that all the ONUs have been registered, then the BWMAP processing module is told that there is no ONU to be registered in the present system and the BWMAP processing module discards the processing of this upstream bandwidth map (Upstream BWMAP) domain.

At the discovery and register stage of the ONU, the module further needs to scan those unregistered ONUs of the present system and generate a suitable kind of physical layer OAM upstream (PLOAMu) domain to be sent to the upstream GTC framing module. At other stages, this module is further used for generating a suitable PLOAMu domain according to the PLOAMu request of the BWMAP processing module or according to the PLOAMd domain, or when there is no PLOAMu which needs a response, generating a null PLOAMu domain to be sent to the upstream GTC framing module.

In addition, this module further needs to send some PLOAMd domains to the CPU via the external parallel bus interface module and provide a channel for the CPU to query the state of each ONU.

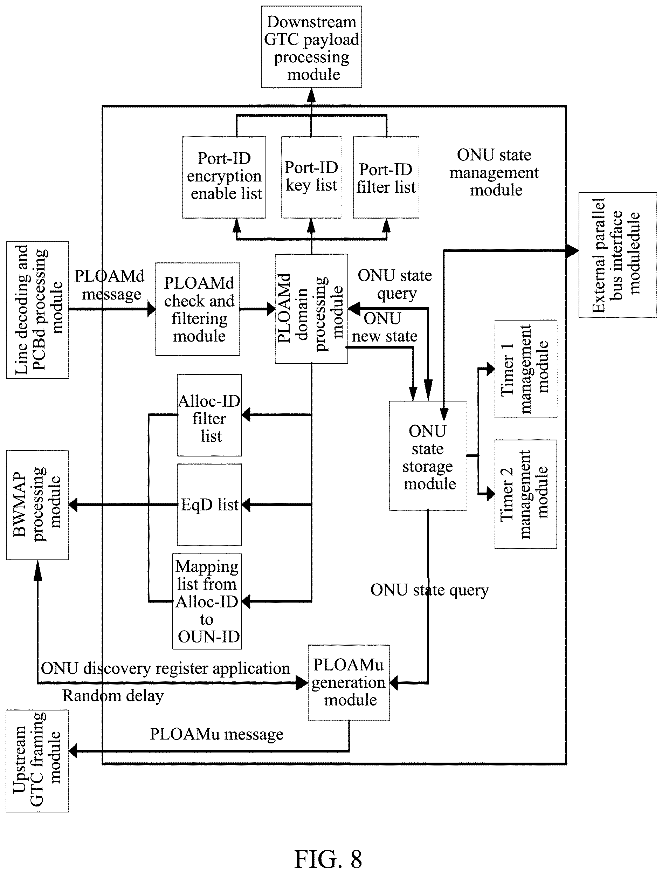

FIG. 8 is a functional structure block diagram of an ONU state management module in the present invention, and the ONU state management module further comprises:
a) a PLOAMd check and filtering module, and the submodule completes the check of the downstream PLOAMd domain and views whether it is the ONU-ID managed by the present system according to the ONU-ID in the PLOAMd domain. The filtered PLOAMd domain is delivered to the downstream PLOAMd domain processing module for management.
b) the PLOAMd domain processing module, and the submodule completes the feedback of the PLOAMd domain, completes the initiation of state migration application to an ONU state storage module, and completes the state migration of each ONU.
c) the ONU state storage module, and the submodule completes the storage of the state of each ONU. This submodule completes the state migration of each ONU according to the state migration application of the ONU and starts up the timing of timer management module 1 and timer management module 2 of the ONU state according to the new and old state of the migration.
d) the timer management module, including a timer 1 management module and a timer 2 management module; wherein
the timer 1 management module is used for monitoring the ranging state of each ONU, and when a certain ONU is in a ranging state during the registration process of the ONU, this module starts up the timing 1, and if the ONU has not yet migrated out of the ranging state before the timer 1 has timed out, then it starts to migrate the state of the ONU to the initial state.

The timer 2 management module is used for monitoring the suspended state of each ONU and starting up the timing 2 when a certain ONU is in the suspended state. If the ONU has not yet migrated out of the suspended state before the timer 2 has timed out, then it starts to migrate the state of the ONU to the initial state.
f) a PLOAMu generation module, and the submodule completes the interaction with the BWMAP processing module, responds to the ONU register application initiated by the BWMAP processing module and queries the first unregistered ONU of the present system toward the ONU state storage module, if it is found, then it is fed back to the BWMAP processing module, and then acquires a random delay given by the BWMAP processing module, and generates a suitable PLOAMu domain to be sent to the upstream GTC framing module.

The different between this module and the equivalent module in the related art lies in that it is required to manage the states of a plurality of ONUs, process the PLOAMd domains of a plurality of ONUs, completes the configuration of the mapping list from Alloc-ID to ONU-ID, completes the configuration of the Alloc-ID filter list and completes the configuration of the Port-ID encryption enable list.

### (3) downstream GTC frame payload processing module

This module is used for completing the search and decryption of the GEM frame of the payload portion of the downstream GTC frame and the discard of those frames not belonging to the present system; completing the separation of user data and management information according to the type of the GEM frame and the type of the Port-ID; sending the management information to the CPU for processing via the external parallel bus interface module; carrying out Ethernet message reassembly on the user data in the unit of Port-ID, and completing the transmission of the Ethernet message according to the mapping relationship between the Port-ID and the gigabit Ethernet interface module.

The management information to be provided to the CPU for processing in this portion includes two classes: the first class is an OMCI (ONU Management and Control Interface) message, and the judgment basis thereof is that Port-ID is the Port-ID of the ONU Management and Control Interface; and the other class is that the GEM frame type is an OAM (Operations, Administration and Maintenance) message, and the judgment basis thereof is that the payload type indicator of the GEM frame header is of the GEM OAM type.

In a particular embodiment of the present invention, this module has to be able to maintain the message reassembly including up to 4096 Port-IDs, and completes the decryption of the message according to the Port-ID of each ONU. At the same time, it also has to complete the extraction of the OMCI message and OAM message of each ONU.

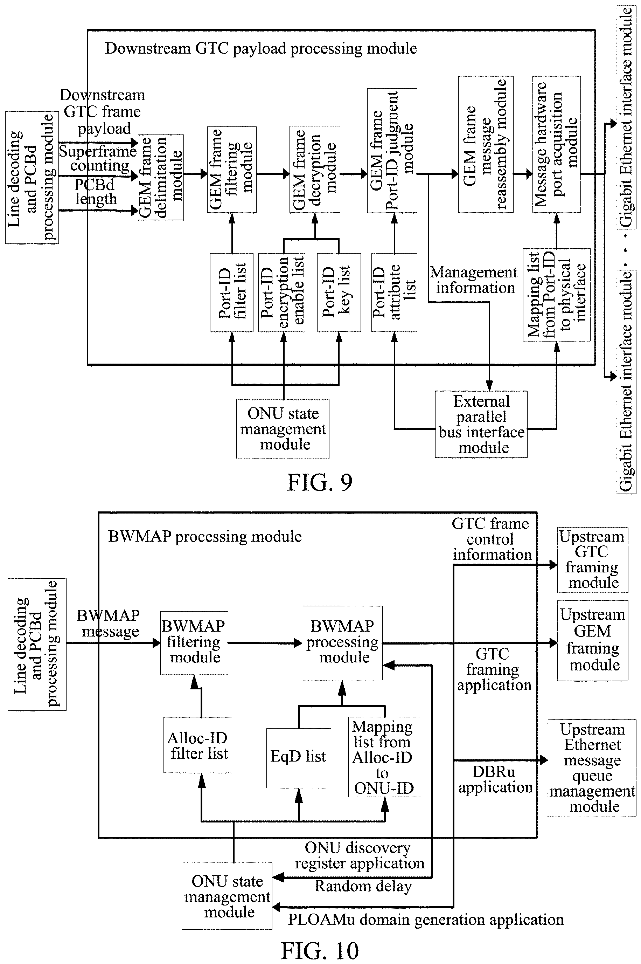

FIG. 9 is a functional block diagram of a downstream GTC frame payload processing module in an MAC module of a GPON ONU implemented by the present invention, and the module comprises:
a GEM frame delimitation module for the search and delimitation of the GEM frame of the payload portion of the downstream GTC frame;
a GEM frame filtering module for filtering the GEM frame not belonging to the present system according to the Port-ID filter list provided by the ONU state management module;
a GEM frame decryption module for carrying out GEM frame decryption according to the Port-ID encryption enable list and Port-ID key list provided by the ONU state management module;
a GEM frame Port-ID judgment module for completing the separation of user data and management information according to the Port-ID attribute list provided by the CPU via the external parallel bus interface module; sending the management information to the CPU for processing via the external parallel bus interface module; and sending the user data to a GEM frame message reassembly module for processing;
the GEM frame message reassembly module for carrying out Ethernet message reassembly on the user data in the unit of Port-ID; and
a message hardware port acquisition module for looking up the destination gigabit Ethernet interface module corresponding to the Port-ID of the message according to the mapping list from Port-ID to hardware interface provide by the CPU via the external parallel bus interface module, and sending out the Ethernet message via the corresponding destination gigabit Ethernet interface module.

### (4) bandwidth map (BWMAP) processing module

This module completes the processing of the upstream bandwidth map (Upstream BWMAP) domain of each ONU in the downstream GTC frame, and filters those BWMAP domains not belonging to the present system according to the Alloc-ID filter list.

FIG. 10 is a functional block diagram of a BWMAP processing module in an MAC module of a GPON ONU implemented by the present invention, and the module comprises:
a BWMAP filtering module for filtering those BWMAP domains not belonging to the present system according to the Alloc-ID filter list provided by the ONU state management module. The method for filtering those BWMAP domains not belonging to the present system is as follows: looking up the Alloc-ID filter list maintained by the ONU state management module by the index of Alloc-ID, if the Alloc-ID does not exist in the Alloc-ID filter list, then it indicates that the BWMAP domain is not a domain belonging to the present system and the BWMAP domain should be discarded.

A BWMAP processing unit, which mainly completes the processing of the Upstream BWMAP domain, and its main functions include: sending the GTC frame control information to the upstream GTC framing module; initiating an ONU discovery register application and initiating a PLOAMu domain generation application to the ONU state management module; initiating a GEM framing application to the upstream GEM framing module; initiating a DBRu application to the upstream Ethernet message queue management module;
the GTC frame control information includes: the starting and ending time of sending the upstream GTC frame, whether the upstream GTC frame needs to include the information about the PLOu domain, physical layer OAM upstream (PLOAMu) domain and DBRu domain.

As to an Upstream BWMAP with effective and non-broadcast Alloc-ID, the module queries the mapping list from Alloc-ID to ONU-ID located in the ONU state management module according to the Alloc-ID, queries the corresponding ONU-ID, queries the EqD list located in the ONU state management module according to the ONU-ID to obtain the equalization delay between the ONU corresponding to the ONU-ID and the OLT, i.e. the EqD value corresponding to the ONU-ID, and obtains the starting and ending time of sending the upstream GTC frame corresponding to the ONU-ID.

As to an Upstream BWMAP domain with the Alloc-ID being equal to a broadcast Alloc-ID, the module needs to initiate an ONU discovery register application to the ONU state management module, and the ONU state management module completes the generation of the PLOAMu, whose type is the feedback Serial_number_ONU, of the unregistered ONU, and completes the discovery of the ONU and the subsequent ranging and register. If the ONU state management module feeds back that there is no ONU to be registered, then it discards this Upstream BWMAP domain, otherwise it needs to generate a random delay and feed back the random delay to the ONU state management module, and at the same time it calculates the sending time of the upstream GTC frame according to this random delay in conjunction with the starting and ending time of the Upstream BWMAP domain.

The module further needs to, according to each content in the BWMAP domain, complete the initiation of the application generated by the dynamic bandwidth report upstream (DBRu) domain to the upstream Ethernet message queue management module, the initiation of a GEM framing application to the upstream GEM framing module, the initiation of a PLOAMu domain generation application to the ONU state management module, and notification to the upstream GTC framing module whether the upstream GTC frame needs to include the PLOu domain, PLOAMu domain and DBRu domain.

Furthermore, this module is further used for calculating whether the bandwidth allocation of each ONU is continuous allocation (i.e. judging whether the Alloc-IDs of continuous Upstream BWMAP domains belong to the same ONU-ID and whether the ending time of the previous Upstream BWMAP plus 1 is equal to the starting time of the next Upstream BWMAP), if continuous, indicating the upstream GTC framing module that the PLOu domain doesn't need to be sent in the upstream GTC frame corresponding to the second Upstream BWMAP domain.

### (5) upstream Ethernet message processing module

This module completes the reception of an Ethernet message from each gigabit Ethernet interface, acquires the Port-ID and Alloc-ID to which the message belongs according to the CPU configuration information (including the Port-ID acquisition rule list and Alloc-ID acquisition rule list of the message) sent by the external parallel bus interface module, and applies to the upstream Ethernet message queue management module for message enqueue according to the Alloc-ID.

The acquisition rule of Alloc-ID and Port-ID is configured by the CPU, and it can be configured as the acquisition being based on the VLAN-ID of the message or the acquisition being based on the type of the message.

### (6) upstream Ethernet message queue management module

This module completes the queue management of each upstream Alloc-ID, counts up the total number of bytes of the message stored in each queue and completes the generation of a DBRu report according to the number of bytes when the BWMAP processing module applies for the DBRu report. What is also managed together with each message is the Port-ID to which the message belongs. This module also needs to process the enqueue application of the OMCI message inserted by the external parallel bus interface module.

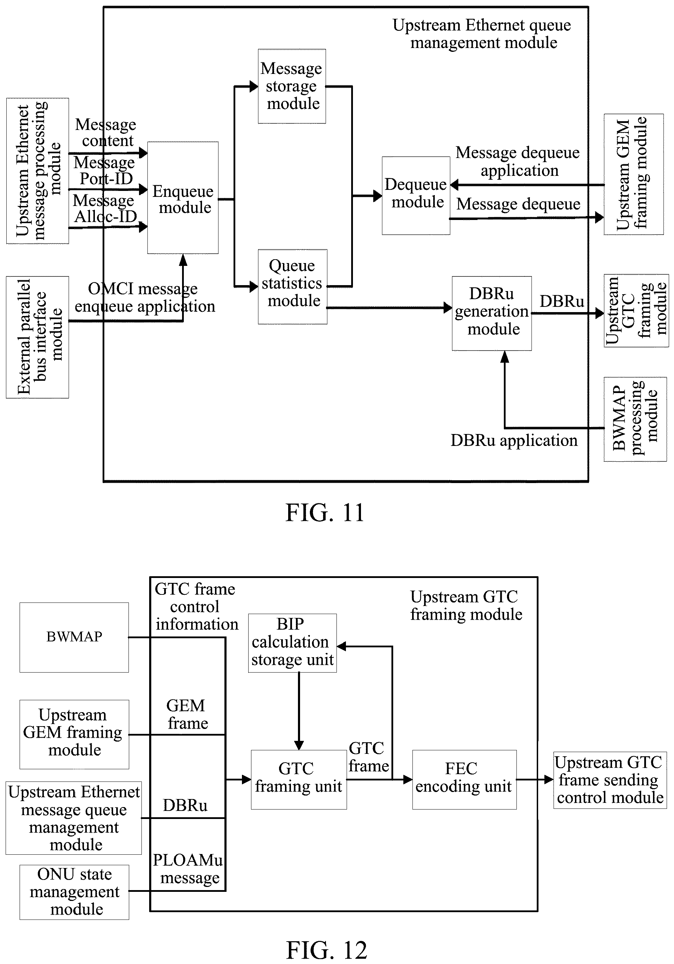

FIG. 11 is a functional block diagram of an upstream Ethernet message queue management module in an MAC module of a GPON ONU implemented by the present invention, and the module comprises:
an enqueue module for receiving the message content, message Port-ID and message Alloc-ID sent by the upstream Ethernet message processing module and the OMCI message enqueue application sent by the external parallel bus interface module to carry out an enqueue operation; and
a message storage module for the storage management of the enqueued message. Since there are numerous queues required to be maintained, this module may need to be connected to an external storage chip for storing the message content, and the content of identifying the message information, such as the address and length of the message in an external storage, are stored in the queue.

A queue statistics module for counting up the total number of bytes of the message stored in each queue;
a DBRu generation module for, after having received the DBRu application sent by the BWMAP processing module, generating a DBRu report according to the statistics result of the queue statistics module, and sending the DBRu report to the upstream GTC framing module; and
a dequeue module for acquiring the message content via the message storage module according to a message dequeue application sent by the upstream GEM framing module and carrying out dequeue according to the statistics result of the queue statistics module.

### (7) upstream GEM framing module

The module completes the GEM framing according to the length information about the GEM frame domain given by the BWMAP processing module. Assuming that the remaining length of the message is shorter than the length of the GEM frame domain, the upstream GEM framing module needs to apply to the upstream Ethernet message queue management module for dequeue and carries out GEM framing on the next Ethernet message. If the queue is null, then an idle GEM frame is filled therein. After GEM framing, it sends the information to the upstream GTC framing module.

### (8) upstream GTC framing module

The module completes the framing processing of the GTC frame according to the GTC frame control information given by the BWMAP processing module.

If the information given by the BWMAP processing module indicates that the timeslot of the next Alloc-ID is connected to the timing sequence of the present Alloc-ID, then this module needs to read the DBRu (if necessary) and GEM frame for the timeslot of the next Alloc-ID but no longer needs to generate the PLOu domain.

FIG. 12 is a functional block diagram of a upstream GTC framing module in an MAC module of a GPON ONU implemented by the present invention, and the module comprises:
a GTC framing unit for reading the PLOAMu domain, DBRu domain and upstream GEM frame according to the indication given by the BWMAP processing module, and adding a PLOu domain to complete the framing of the upstream GTC frame;
generating the information required by GTC frame includes: the GEM frame of the GEM framing module, the PLOAMu message of the ONU state management module, the PLOu domain generated by the present module and the DBRu domain generated by the upstream queue management module.

A BIP calculation storage unit is used for generating and storing the bit interleaved parity (BIP) of each upstream GTC frame; the BIP domain is across the upstream GTC frame, so it needs to be stored, and the BIP domain is taken as a part of the PLOu domain.

An FEC encoding unit is used for carrying out forward error correction encoding of the upstream GTC frame and sending the encoded GTC frame to the upstream GTC frame sending control module.

### (9) upstream GTC frame sending control module

The module completes the transmission of the upstream GTC frame at a specified time node according to the starting and ending time of sending the upstream GTC frame given by the upstream GTC framing module. The time node thereof is decided according to the 8 KHz clock and superframe counting sent by the line decoding and PCBd processing module.

### 10) gigabit Ethernet interface module

The module completes the message reception and transmission of the gigabit Ethernet interface corresponding to each ONU.

### 11) external parallel bus interface module

The module is an interface module of an external CPU chip, and via this interface, the CPU can complete the processing of the OMCI message of each ONU managed by the present system, the processing of the PLOAMd domain, the processing of the OAM message and the configuration management of each entry inside the system.

There are the following entries to be configured by the CPU:
a) Port-ID attribute list, which is used for judging whether the Port-ID is an OMCI Port-ID and for providing it to the downstream GTC frame payload processing module to complete the separation of user data and management information according to the type of the Port-ID of each ONU.
b) acquisition rule list of Alloc-ID and Port-ID, which is used for the upstream Ethernet message processing module acquiring the Port-ID and Port-ID of the message according to the physical port or the feature of the message.
c) mapping list from Port-ID to hardware interface, which is used for the downstream GTC payload processing module looking up its destination gigabit Ethernet interface module according to the Port-ID of the message.

The modules required to be interacted with the present module are: the upstream Ethernet message processing module, the upstream Ethernet message queue management module, the ONU state management module and the downstream GTC frame payload processing module.

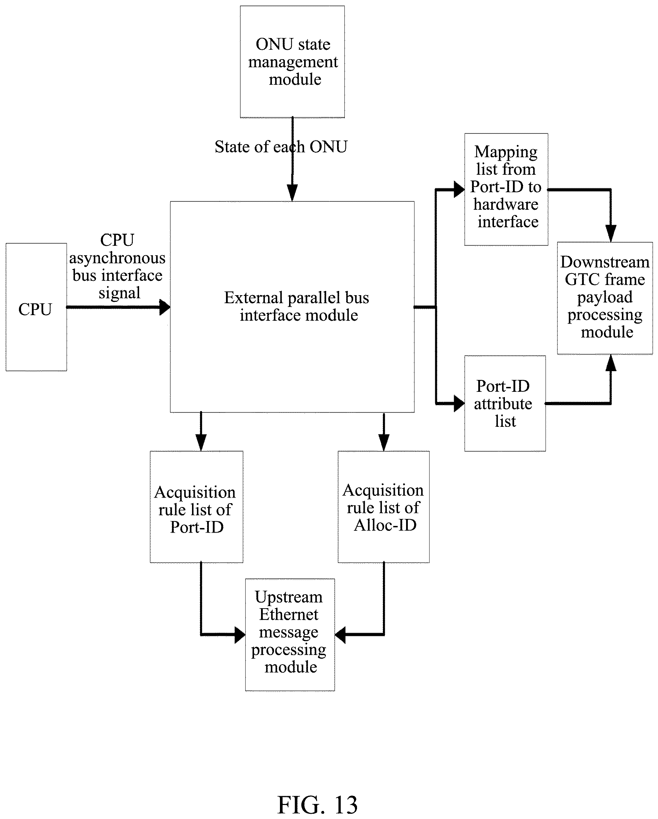

FIG. 13 is a diagram of the connection relationships between the external parallel bus interface module and other modules in the MAC module of the GPON ONU implemented by the present invention, and as shown in the figure, the CPU reads the state of each ONU from the ONU state management module via the external parallel bus interface module; the upstream Ethernet message processing module reads the acquisition rule list of Alloc-ID and Port-ID stored by the CPU via the external parallel bus interface module, and acquires the Port-ID and Alloc-ID to which the message belongs according to the list.

In addition, the module is also equiped with an configuration interface of the OMCI Port-ID for each ONU.

In a preferred embodiment of the present invention, the CPU is integrated in the ONU integration apparatus in the present invention, i.e. the CPU chip in FIG. 4 is integrated with the MAC module, and if FIG. 13 is taken as an example, i.e. the CPU and the external parallel bus interface module are integrated into one module, the functions completed by the CPU will not be changed, and after integration, the processing speed and efficiency of system can be improved.

### Data processing flow:

The processing procedure of the upstream and downstream data in the present invention will be described on the basis of the GPON ONU integration apparatus provided by the present invention:
the processing steps of downstream data are as follows:
in step 11, an optical module receives downstream optical port data from an optical fiber line and transmits it to a line decoding and physical control block downstream (PCBd) processing module.

In step 12, after having finished operations such as the decoding of the line encoding and so on, the line decoding and PCBd processing module submits all the Upstream BWMAP domains to the BWMAP processing module for processing, submits the physical layer OAM downstream (PLOAMd) domain to the BWMAP processing module for processing and forwards the payload portion of the GTC frame to the downstream GTC frame payload processing module for processing.

In step 13, the downstream GTC frame payload processing module receives the downstream GTC frame payload sent by the line decoding and PCBd processing module and completes the search, decryption and filtering of the GEM frame; it completes the separation of user data and management information according to the type of the GEM frame and the type of the Port-ID and sends the management information to CPU for processing via the external parallel bus interface module, and it carries out Ethernet message reassembly on the user data in the unit of Port-ID and completes the transmission of the Ethernet message according to the mapping relationship between the Port-ID and the gigabit Ethernet interface module.

In this step, the method for filtering the GEM frame is as follows: querying the Port-ID filter list maintained by the ONU state management module by taking the Port-ID of the GEM frame as the index, and judging whether the GEM frame is the GEM frame processed by the present system, if there is no corresponding Port-ID in the Port-ID filter list, then the GEM frame is not the GEM frame processed by the present system, discarding the GEM frame.

In this step, the method for decrypting the GEM frame is as follows: querying the Port-ID encryption enable list and Port-ID key list maintained by the ONU state management module by taking the Port-ID of the GEM frame as the index to obtain the key of the GEM frame, superframe counting and byte offset so as to complete the decryption of the GEM frame.

In this step, the method for separating user data from management information is as follows: judging whether this Port-ID is a Port-ID of the ONU management and control interface (OMCI) through querying the Port-ID attribute list maintained by the CPU via the external parallel bus interface module by taking the Port-ID of the GEM as the index, if yes, then submitting this GEM frame to the CPU for processing via the external parallel bus interface module.

The processing steps of upstream data are as follows:
in step 21: the upstream data is received from the gigabit Ethernet interface and delivered to the upstream Ethernet message processing module, and the upstream Ethernet message processing module completes the acquisition of Alloc-ID and Port-ID of the message according to the configuration of the CPU, then applying to the upstream Ethernet message queue management module for enqueue according to the Alloc-ID;
the acquisition rule of Port-ID and Alloc-ID is configured by the CPU, and the rule can be configured according to the virtual local area network identifier (VLAN-ID) of the message or the type of the message, etc.

In step 22: the upstream Ethernet message queue management module completes the message enqueue by taking the Alloc-ID as the index after having received a message enqueue request from the upstream Ethernet message processing module;
the upstream Ethernet message queue management module is further used for receiving the OAM message which is sent by the CPU via the external parallel bus interface module and carries out enqueue thereon;
the upstream Ethernet message queue management module stores the Port-ID, message storage address and length information about the enqueue message. The message data not only can be stored inside the MAC chip but also can be stored in an external storage.

The upstream queue management module also needs to calculate the length of the message stored in each queue and respond to a DBRu domain generation application of the BWMAP module to generate a DBRu domain.

In step 23: the upstream Ethernet message queue management module responds to a dequeue operation of the GEM framing module and completes the message dequeue;
the upstream Ethernet message queue management module is further used for completing the generation of the DBRu domain of the upstream GTC frame in responsive to the DBRu application sent by the BWMAP processing module. The generation of DBRu shall follow the G.984.3 standard.

In step 24: the upstream GEM framing module completes the GEM framing according to the length of the Alloc-ID and GEM domain in responsive to the GEM framing request of the BWMAP processing module and sends the GEM frame to the upstream GTC framing module for processing;
if the current message fails to meet the GEM framing requirements, then the upstream GEM framing module initiates a message dequeue application to the upstream Ethernet message queue management module to request to carry out GEM framing on new messages. If the queue is null, then an idle GEM frame is filled therein. If the GEM frame tail is not enough to send a complete GEM frame header, then part of the GEM IDLE frame will be filled therein.

The upstream GEM framing module is further used for completing the framing of the OAM message inserted by the CPU.

In step 25, after having finished the work of forming a GTC frame by using the PLOu domain, PLOAMu domain, DBRu domain, and GEM domain according to the information given by the BWMAP about each domain which should be sent by the upstream GTC frame, the upstream GTC framing module sends the GTC frame to the upstream GTC frame sending control module.

If the BWMAP indicates that the timing sequence windows of 2 Alloc-IDs are of continuous frame sending mode, then these 2 windows are combined into one for transmission. In the present module, it is also required to calculate the BIP of the upstream GTC frame and update the BIP value of the corresponding ONU-ID.

In step 26, the upstream GTC frame sending control module sends out the GTC frame via an upstream optical port;
the sending time is decided on the basis of the starting and ending time of the timeslot and the 8 KHz clock and superframe counting given by the downstream line decoding and PCBd processing module.

### System control part:

The system control of the ONU integration apparatus in the present invention is mainly completed by three modules, which are respectively: BWMAP processing module, ONU state control module and the external parallel bus interface module. The detailed operation process of each module thereof is as follows:
(1) the control operation of the BWMAP processing module includes:
   The present module completes the reception of the BWMAP domain data given by the downstream line decoding and PCBd processing module. It first completes the check of the BWAMP domain and completes the discarding of the BWAMP domain where the check fails and BWAMP domain of the Alloc-ID not belonging to the present system through querying the Alloc-ID filter list to obtain the result about whether the Alloc-ID belongs to the present system.
   In normal situation, the BWMAP domain obtains the ONU-ID to which it belongs according to the Alloc-ID, and then it queries the EqD list maintained by the ONU state management module to obtain the EqD of this ONU-ID and adds the 34 us to 36 us fixed delay thereon to obtain the starting sending time of the GTC frame and the length of the GTC frame; it applies to the upstream Ethernet message queue management module for generating a DBRu report according to the indication; in addition, it further needs to analysis whether the difference between the ending time of the next BWMAP domain and that of the present BWMAP domain is 1, if yes, then it indicates that this BWMAP domain and the next BWMAP domain need to be sent together by connection, and this information needs to be notified to the upstream GTC framing module.
   At the register stage of ONU, the BWMAP domain further needs to judge whether an ONU register response message needs to be fed back according to the content of the BWMAP domain, if yes, then it sends out information about generating an ONU register response message to the ONU state management module and await the feedback of the ONU state management module. What is sent out together is a random delay generated by the BWMAP processing module.
   The BWMAP processing module further need to transmit the indication information in the FLAG field of the BWMAP domain to the upstream GTC framing module, which includes whether the upstream GTC frame needs to send the DBRu domain, PLOu domain or PLOAMu domain.
   The Alloc-ID filter list, mapping list from Alloc-ID to ONU-ID and EqD list used by the present module are all configured by the ONU state control module according to the received PLOAMd domain.
(2) the control operation of the ONU state control module includes:
   the ONU state control module completes the state management of all the ONUs in the system, and it needs to maintain the state list of each ONU and complete the configuration of the EqD list, the configuration of the Alloc-ID filter list, the configuration of the mapping list from Alloc-ID to ONU-ID and the configuration of the Port-ID filter list, and at the same time it needs to complete the check and reception of the downstream PLOAMd domain and feed back the relevant PLOAMd domain to the CPU via the external parallel bus interface module. At the same time, it needs to generate a suitable PLOAMu domain for the upstream GTC framing module according to the PLOAMd domain, and it further needs to generate a suitable type of PLOAMu domain for the upstream GTC framing module in responsive to the request that the ONU registers the PLOAMu domain sent by the BWMAP processing module.
(3) the control operation of the external parallel bus interface module includes:
   The external parallel bus interface module completes the interaction with the CPU outside the system, and it submits the OMCI message and the PLOAMd domain required to be fed back to CPU to the CPU and then sends the configuration of the CPU to each module.

## Claims

1. An optical network unit integration apparatus, comprising:
a line decoding and physical control block downstream (PCBd) processing module configured to receive downstream optical port data from an optical module; provide a frame header indicator to an upstream gigabit passive optical network transmission convergence (GTC) frame sending control module; submit an upstream bandwidth map (Upstream BWMAP) domain to a bandwidth map (BWMAP) processing module; submit a physical layer OAM downstream (PLOAMd) domain to an optical network unit (ONU) state management module; and submit a GTC frame payload portion, length information about the PCBd and superframe counting to a downstream GTC frame payload processing module;
the downstream GTC frame payload processing module configured to complete filtering and decryption of a gigabit passive optical network encapsulation method (GEM) frame according to a port identifier (Port-ID) filter list, a Port-ID encryption enable list and a Port-ID key list provided by the ONU state management module; complete separation of user data and management information according to a Port-ID attribute list provided by an external parallel bus interface module; complete Ethernet message reassembly for Port-ID of each ONU; and complete transmission of an Ethernet message according to a mapping list from Port-ID to hardware interface provided by a central process unit (CPU) via the external parallel bus interface module;
the ONU state management module configured to respond to a PLOAMd message and maintain state information about each ONU; respond to an ONU discovery register application of the BWMAP processing module and generate a physical layer OAM upstream (PLOAMu) domain to be sent to a upstream GTC framing module; complete configuration of a bandwidth allocation identifier (Alloc-ID) filter list, a mapping list from Alloc-ID to ONU identifier (ONU-ID), an equalization delay (EqD) list between optical line terminal and ONU, the Port-ID encryption enable list, the Port-ID key list and the Port-ID filter list according to the PLOAMd message;
the BWMAP processing module configured to complete processing of the Upstream BWMAP domain of each ONU; filter a BWMAP domain not belonging to the present system according to the Alloc-ID filter list provided by the ONU state management module; acquire GTC frame control information to be sent to the upstream GTC framing module according to the mapping list from Alloc-ID to ONU-ID and the EqD list provided by the ONU state management module; initiate the ONU discovery register application to the ONU state management module; initiate an application of generating a dynamic bandwidth report upstream (DBRu) domain to an upstream Ethernet message queue management module; and initiate a GEM framing application to an upstream GEM framing module;
an upstream Ethernet message processing module configured to complete reception of the Ethernet message from a gigabit Ethernet interface of each ONU, acquire the Port-ID and Alloc-ID to which that message belongs according to CPU configuration information sent by the external parallel bus interface module and apply to the upstream Ethernet message queue management module for message enqueue according to the Alloc-ID;
the upstream Ethernet message queue management module configured to complete the queue management of each upstream Alloc-ID; complete generation of a DBRu report when the BWMAP processing module applies for the DBRu report; and process an enqueue application of an ONU management and control interface (OMCI) message inserted by the external parallel bus interface module;
the upstream GEM framing module configured to complete GEM framing according to length information about GEM frame domain given by the BWMAP processing module;
the upstream GTC framing module configured to complete framing processing of GTC frame according to the GTC frame control information and PLOAMu message of the ONU state management module given by the BWMAP processing module;
the upstream GTC frame sending control module configured to send an upstream GTC frame according to clock and superframe counting given by the line decoding and PCBd processing module;
the external parallel bus interface module configured to provide an interface to an external CPU chip; and provide a query interface for reading a state of each ONU to the CPU; and
a gigabit Ethernet interface module configured to complete message reception and transmission of the gigabit Ethernet interface of each ONU.

2. The apparatus according to claim 1, wherein the ONU state management module comprises:
a PLOAMd check and filtering module configured to complete check and filtering of downstream PLOAMd domain and submit a filtered PLOAMd domain to a PLOAMd domain processing module for management;
the PLOAMd domain processing module configured to complete a feedback of PLOAMd domain and complete an initiation of state migration application to an ONU state storage module;
the ONU state storage module configured to complete storage of the state of each ONU; complete state migration of each ONU according to the state migration application of ONU; and start a timer management module according to new and old states of migration;
the timer management module configured to complete ranging state monitoring and suspended state monitoring of each ONU; and
a PLOAMu generation module configured to respond to the ONU discovery register application initiated by the BWMAP processing module and generate a suitable PLOAMu domain to be sent to the upstream GTC framing module.

3. The apparatus according to claim 1, wherein the downstream GTC frame payload processing module comprises:
a GEM frame delimitation module configured for search and delimitation of a GEM frame of a payload portion of downstream GTC frame;
a GEM frame filter module configured to filter the GEM frame not belonging to the present system according to the Port-ID filter list provided by the ONU state management module;
a GEM frame decryption module configured to carry out GEM frame decryption according to the Port-ID encryption enable list and Port-ID key list provided by the ONU state management module;
a GEM frame Port-ID judgment module configured to complete the separation of user data and management information according to the Port-ID attribute list provided by the CPU via the external parallel bus interface module; send the management information to the CPU for processing via the external parallel bus interface module; and send the user data to a GEM frame message reassembly module for processing;
the GEM frame message reassembly module configured to carry out the Ethernet message reassembly on the user data in a unit of Port-ID; and
a message hardware port acquisition module configured to look up a destination gigabit Ethernet interface module corresponding to the Port-ID of message according to the mapping list from Port-ID to hardware interface provide by the CPU via the external parallel bus interface module, and send out the Ethernet message via a corresponding destination gigabit Ethernet interface module.

4. The apparatus according to claim 1, wherein the BWMAP processing module is further configured to calculate whether bandwidth allocation of each ONU is allocated continuously, if continuous, indicate the upstream GTC framing module not to send a PLOu domain within the upstream GTC frame corresponding to second Upstream BWMAP domain.

5. The apparatus according to claim 1, wherein the upstream Ethernet message queue management module comprises:
an enqueue module configured to receive message content, message Port-ID and message Alloc-ID sent by the upstream Ethernet message processing module and a OMCI message enqueue application sent by the external parallel bus interface module to carry out an enqueue operation;
a message storage module configured for storage management of the enqueued message;
a queue statistics module configured to count up the total number of bytes of message stored in each queue;
a DBRu generation module configured to, after having received a DBRu application sent by the BWMAP processing module, generate a DBRu report according to a statistics result of the queue statistics module and send the DBRu report to the upstream GTC framing module; and
a dequeue module configured to acquire the message content via the message storage module according to a message dequeue application sent by an upstream GEM framing module and carry out dequeue according to the statistics result of the queue statistics module.

6. The apparatus according to claim 5, wherein the message storage module carries out storage of the message content via an external storage chip and identifies that content of message information is stored in a queue.

7. The apparatus according to claim 1, wherein the upstream GTC framing module comprises:
a GTC framing unit configured to read the PLOAMu domain, DBRu domain and an upstream GEM frame according to GTC control information of the BWMAP processing module, and add a PLOu domain to complete framing of the upstream GTC frame;
a BIP calculation storage unit configured to generate and store a bit interleaved parity (BIP) of each upstream GTC frame; and
a FEC encoding unit configured to carry out forward error correction encoding of the upstream GTC frame and send the encoded GTC frame to the upstream GTC frame sending control module.

8. The apparatus according to claim 4 or 7, wherein if information given by the BWMAP processing module indicates that a timeslot of a next Alloc-ID and a timing sequence of present Alloc-ID are connected to each other, then the upstream GTC framing module needs to read the DBRu domain and GEM frame for the timeslot of the next Alloc-ID but no longer needs to generate the PLOu domain.

9. The apparatus according to claim 1, wherein the CPU is configured to read the state of each ONU from the ONU state management module via the external parallel bus interface module; the upstream Ethernet message processing module is configured to read an acquisition rule list of Alloc-ID and Port-ID stored by the CPU via the external parallel bus interface module and acquire the Port-ID and Alloc-ID to which a message belongs according to that list.

10. The apparatus according to claim 1, wherein the CPU is integrated with the external parallel bus interface module.

## Patentansprüche

1. Vorrichtung zur Integration einer optischen Netzwerkeinheit, umfassend:
ein zeilendekodierendes und physikalisches Steuerblock-Downstream-(PCBd)-Verarbeitungsmodul, das konfiguriert ist zum Empfangen von optischen Downstream-Port-Daten von einem optischen Modul; Bereitstellen eines Frame-Header-Indikators für ein passives optisches Upstream-Gigabit-Netzwerk-Übertragungskonvergenz-(GTC)-framesendendes Steuermodul; Einreichen einer Upstream-Bandbreiten-Map-(Upstream BWMAP)-Domäne zu einem Bandbreiten-Map-(BWMAP)-Verarbeitungsmodul; Einreichen einer physikalischen OAM-Schicht-Downstream (PLOAMd) -Domäne zu einem optischen Netzwerkeinheit-(ONU)-Zustandsverwaltungsmodul; und Einreichen eines GTC-Frame-Nutzlastabschnitts, wobei Längeninformationen über den PCBd und Superframe zu einem Downstream-GTC-Frame-Nutzlastverarbeitungsmodul zählen;
das Downstream-GTC-Frame-Nutzlastverarbeitungsmodul, konfiguriert zum Abschließen des Filterns und der Entschlüsselung eines passiven optischen Gigabit-Netzwerk-Verkapselungsverfahrens-(GEM) -Frames gemäß einer Port-Identifikations-(Port-ID)-Filterliste, einer Port-ID-Verschlüsselungsaktivierungsliste und einer Port-ID-Schlüsselliste, die durch das ONU-Zustandsverwaltungsmodul bereitgestellt ist; Abschließen der Trennung von Benutzerdaten und Verwaltungsinformationen gemäß einer Port-ID-Attributliste, die durch ein externes paralleles Busschnittstellenmodul bereitgestellt ist; Abschließen der Ethernet-Nachricht-Reassemblierung für die Port-ID von jeder ONU; und Abschließen der Übertragung einer Ethernet-Nachricht gemäß einer Mapping-Liste von Port-ID zu einer Hardwareschnittstelle, die durch eine Zentraleinheit (CPU) über das externe parallele Busschnittstellenmodul bereitgestellt ist;
das ONU-Zustandsverwaltungsmodul, konfiguriert zum Antworten auf eine PLOAMd-Nachricht und Aufrechterhalten von Zustandsinformationen über jede ONU; Antworten auf eine ONU-Entdeckungsregisteranwendung des BWMAP-Verarbeitungsmoduls und Erzeugen einer physikalischen OAM-Schicht-Upstream-(PLOAMu)-Domäne, die zu einem Upstream-GTC-Framing-Modul gesendet werden soll; Abschließen der Konfiguration einer Bandbreitenzuordnungsidentifikations-(Alloc-ID)-Filterliste, einer Mapping-Liste von Alloc-ID zu ONU-Identifikation (ONU-ID), einer Ausgleichsverspätungs-(EqD)-Liste zwischen einem optischen Line-Terminal und der ONU, der Port-ID-Verschlüsselungsaktivierungsliste, der Port-ID-Schlüsselliste und der Port-ID-Filterliste gemäß der PLOAMd-Nachricht;
das BWMAP-Verarbeitungsmodul, konfiguriert zum Abschließen des Verarbeitens der Upstream-BWMAP-Domäne von jeder ONU; Filtern einer BWMAP-Domäne, die nicht zu dem aktuellen System gehört, gemäß der Alloc-ID-Filterliste, die durch das ONU-Zustandsverwaltungsmodul bereitgestellt ist; Erfassen von GTC-Frame-Steuerinformationen, die zu dem Upstream-GTC-Framing-Modul gesendet werden sollen, gemäß der Mapping-Liste von Alloc-ID zu ONU-ID und der EqD-Liste, die durch das ONU-Zustandsverwaltungsmodul bereitgestellt ist; Initiieren der ONU-Entdeckungsregisteranwendung auf das ONU-Zustandsverwaltungsmodul; Initiieren einer Anwendung des Erzeugens einer dynamischen Bandbreitenbericht-Upstream-(DBRu)-Domäne auf ein Upstream-Ethernet-Nachricht-Warteschlangenverwaltungsmodul; und Initiieren einer GEM-Framing-Anwendung auf ein Upstream-GEM-Framing-Modul;
ein Upstream-Ethernet-Nachrichtverarbeitungsmodul, konfiguriert zum Abschließen des Empfangs der Ethernet-Nachricht von einer Gigabit-Ethernet-Schnittstelle von jeder ONU, Erfassen der Port-ID und Alloc-ID, zu der diese Nachricht gehört, gemäß den CPU-Konfigurationsinformationen, die durch das externe parallele Busschnittstellenmodul gesendet werden, und Anwenden auf das Upstream-Ethernet-Nachricht-Warteschlangenverwaltungsmodul zur Nachrichten-Enqueue gemäß der Alloc-ID;
das Upstream-Ethernet-Nachricht-Warteschlangenverwaltungsmodul, konfiguriert zum Abschließen der Warteschlangenverwaltung von jeder Upstream-Alloc-ID; Abschließen der Erzeugung eines DBRu-Berichts, wenn das BWMAP-Verarbeitungsmodul den DBRu-Bericht beantragt; und Verarbeiten einer Enqueue-Anwendung einer ONU-Verwaltungs- und Steuerschnittstellen-(OMCI)-Nachricht, die durch das externe parallele Busschnittstellenmodul eingefügt wird;
das Upstream-GEM-Framing-Modul, konfiguriert zum Abschließen des GEM-Framing gemäß den Längeninformationen über die GEM-Frame-Domäne, die durch das BWMAP-Verarbeitungsmodul gegeben sind;
das Upstream-GTC-Framing-Modul, konfiguriert zum Abschließen der Framing-Verarbeitung des GTC-Frames gemäß den GTC-Frame-Steuerinformationen und der PLOAMu-Nachricht des ONU-Zustandsverwaltungsmoduls, gegeben durch das BWMAP-Verarbeitungsmodul;
das Upstream-GTC-framesendende Steuermodul, konfiguriert zum Senden eines Upstream-GTC-Frames gemäß Takt- und Superframe-Zählung, gegeben durch das Zeilendekodierer- und PCBd-Verarbeitungsmodul;
das externe parallele Busschnittstellenmodul, konfiguriert zum Bereitstellen einer Schnittstelle für einen externen CPU-Chip; und Bereitstellen einer Abfragenschnittstelle zum Lesen eines Zustands von jeder ONU für die CPU; und
ein Gigabit-Ethernet-Schnittstellenmodul, konfiguriert zum Abschließen des Nachrichtenempfangs und der Übertragung der Gigabit-Ethernet-Schnittstelle von jeder ONU.

2. Vorrichtung nach Anspruch 1, wobei das ONU-Zustandsverwaltungsmodul Folgendes umfasst:
ein PLOAMd-Überprüfungs-und-Filtermodul, konfiguriert zum Abschließen von Überprüfen und Filtern einer Downstream-PLOAMd-Domäne und Einreichen einer gefilterten PLOAMd-Domäne zu einem PLOAMd-Domänen-Verarbeitungsmodul zur Verwaltung;
das PLOAMd-Domänen-Verarbeitungsmodul, konfiguriert zum Abschließen einer Rückkopplung der PLOAMd-Domäne und Abschließen einer Initiierung der Statusmigrationsanwendung auf ein ONU-Zustandsspeichermodul;
das ONU-Zustandsspeichermodul, konfiguriert zum Abschließen des Speicherns des Zustands von jeder ONU; Abschließen der Zustandsmigration von jeder ONU gemäß der Zustandsmigrationsanwendung der ONU; und Starten eines Timer-Verwaltungsmoduls gemäß neuer und alter Migrationszustände;
das Timer-Verwaltungsmodul, konfiguriert zum Abschließen der Reichweitenzustandsüberwachung und Unterbrechungszustandsüberwachung von jeder ONU; und
ein PLOAMu-Erzeugungsmodul, konfiguriert zum Antworten auf die ONU-Entdeckungsregisteranwendung, die durch das BWMAP-Verarbeitungsmodul initiiert ist, und Erzeugen einer geeigneten PLOAMu-Domäne, die zu dem Upstream-GTC-Framing-Modul gesendet werden soll.

3. Vorrichtung nach Anspruch 1, wobei das Downstream-ONU-Frame-Nutzlastverarbeitungsmodul Folgendes umfasst:
ein GEM-Frame-Abgrenzungsmodul, konfiguriert zur Suche und Abgrenzung eines GEM-Frames eines Nutzlastabschnitts eines Downstream-GTC-Frames;
ein GEM-Frame-Filtermodul, konfiguriert zum Filtern des GEM-Frames, der nicht zu dem aktuellen System gehört, gemäß der Port-ID-Filterliste, die durch das ONU-Zustandsverwaltungsmodul bereitgestellt ist;
ein GEM-Frame-Entschlüsselungsmodul, konfiguriert zum Ausführen einer GEM-Frame-Entschlüsselung gemäß der Port-ID-Verschlüsselungsaktivierungsliste und Port-ID-Schlüsselliste, bereitgestellt durch das ONU-Zustandsverwaltungsmodul;
ein GEM-Frame-Port-ID-Beurteilungsmodul, konfiguriert zum Abschließen der Trennung von Benutzerdaten und Verwaltungsinformationen gemäß der Port-ID-Attributliste, die durch die CPU über das externe parallele Busschnittstellenmodul bereitgestellt ist; Senden der Verwaltungsinformationen an die CPU zum Verarbeiten über das externe parallele Busschnittstellenmodul; und Senden der Benutzerdaten an ein GEM-Frame-Nachricht-Reassemblierungsmodul zum Verarbeiten;
das GEM-Frame-Nachricht-Reassemblierungsmodul, konfiguriert zum Ausführen der Ethernet-Nachricht-Reassemblierung an den Benutzerdaten in einer Einheit der Port-ID; und
ein Nachricht-Hardwareport-Erfassungsmodul, konfiguriert zum Nachschlagen eines Ziel-Gigabit-Ethernet-Schnittstellenmoduls entsprechend der Port-ID der Nachricht gemäß der Mapping-Liste der Port-ID zu der Hardware-Schnittstelle, die durch die CPU über das externe parallele Busschnittstellenmodul bereitgestellt ist, und Aussenden der Ethernet-Nachricht über ein entsprechendes Ziel-Gigabit-Ethernet-Schnittstellenmodul.

4. Vorrichtung nach Anspruch 1, wobei das BWMAP-Verarbeitungsmodul ferner konfiguriert ist zum Berechnen, ob die Bandbreitenzuordnung von jeder ONU kontinuierlich zugeordnet ist, wenn kontinuierlich, Anzeigen des Upstream-GTC-Framing-Moduls, dass es keine PLOu-Domäne in dem Upstream-GTC-Frame entsprechend der zweiten Upstream-BWMAP-Domäne sendet.

5. Vorrichtung nach Anspruch 1, wobei das Upstream-Ethernet-Nachricht-Warteschlangenverwaltungsmodul Folgendes umfasst:
ein Enqueue-Modul, konfiguriert zum Empfangen von Nachrichteninhalt, Nachrichten-Port-ID und Nachrichten-Alloc-ID, gesendet durch das Upstream-Ethernet-Nachricht-Verarbeitungsmodul und einer OMCI-Nachricht-Enqueue-Anwendung, gesendet durch das externe parallele Busschnittstellenmodul, um einen Enqueue-Betrieb auszuführen;
ein Nachrichtenspeichermodul, konfiguriert zur Speicherverwaltung der eingereihten Nachricht;
ein Warteschlangenstatistikmodul, konfiguriert zum Zählen der Gesamtanzahl von Bytes von Nachrichten, die in jeder Warteschlange gespeichert sind;
ein DBRu-Erzeugungsmodul, konfiguriert zum, nach dem Empfang einer DBRu-Anwendung, gesendet durch das BWMAP-Verarbeitungsmodul, Erzeugen eines DBRu-Berichts gemäß einem Statistikergebnis des Warteschlangenstatistikmoduls und Senden des DBRu-Berichts an das Upstream-GTC-Framing-Modul; und
ein Dequeue-Modul, konfiguriert zum Erfassen des Nachrichteninhalts über das Nachrichtenspeichermodul gemäß einer Nachricht-Dequeue-Anwendung, gesendet durch ein Upstream-GEM-Framing-Modul, und Ausführen der Dequeue gemäß dem Statistikergebnis des Warteschlangenstatistikmoduls.

6. Vorrichtung nach Anspruch 5, wobei das Nachrichtenspeichermodul das Speichern des Nachrichteninhalts über einen externen Speicher-Chip ausführt und identifiziert, dass der Inhalt aus Nachrichteninformationen in einer Warteschlange gespeichert ist.

7. Vorrichtung nach Anspruch 1, wobei das Upstream-GTC-Framing-Modul Folgendes umfasst:
eine GTC-Framing-Einheit, konfiguriert zum Lesen der PLOAMu-Domäne, DBRu-Domäne und eines GEM-Frames gemäß den GTC-Steuerinformationen des BWMAP-Verarbeitungsmoduls und Hinzufügen einer PLOu-Domäne, um das Framing des Upstream-GTC-Frames abzuschließen;
eine BIP-Berechnungsspeichereinheit, konfiguriert zum Erzeugen und Speichern einer bitverschachtelten Parität (BIP) von jedem Upstream-GTC-Frame; und
eine FEC-Kodierungseinheit, konfiguriert zum Ausführen einer Vorwärtsfehlerkorrekturkodierung des Upstream-GTC-Frames und Senden des kodierten GTC-Frames an das Upstream-GTC-framesendende Steuermodul.

8. Vorrichtung nach Anspruch 4 oder 7, wobei, wenn Informationen, die durch das BWMAP-Verarbeitungsmodul gegeben sind, anzeigen, dass ein Zeitschlitz einer nächsten Alloc-ID und eine Zeitsequenz der vorhandenen Alloc-ID miteinander verbunden sind, dann das Upstream-GTC-Framing-Modul die DBRu-Domäne und den GEM-Frame für den Zeitschlitz der nächsten Alloc-ID lesen muss, aber nicht länger die PLOu-Domäne erzeugen muss.

9. Vorrichtung nach Anspruch 1, wobei die CPU konfiguriert ist, um den Zustand von jeder ONU von dem ONU-Zustandsverwaltungsmodul über das externe parallele Busschnittstellenmodul zu lesen; das Upstream-Ethernet-Nachricht-Verarbeitungsmodul konfiguriert ist, um eine Erfassungsregelliste von Alloc-ID und Port-ID zu lesen, gespeichert durch die CPU über das externe parallele Busschnittstellenmodul, und um die Port-ID und Alloc-ID zu erfassen, zu denen eine Nachricht gemäß dieser Liste gehört.

10. Vorrichtung nach Anspruch 1, wobei die CPU mit dem externen parallelen Busschnittstellenmodul integriert ist.

## Revendications

1. Appareil d'intégration d'une unité de réseau optique, comprenant :
un module de traitement aval du bloc de commande physique (PCBd) et de décodage de la ligne configuré pour recevoir les données d'un port optique en aval provenant d'un module optique ; la mise à disposition d'un indicateur d'en-tête de trame à un module de commande d'envoi de la trame de convergence de transmission du réseau optique passif gigabit (GTC) en amont ; la soumission d'un domaine de plan de bande passante en amont (BWMAP amont) à un module de traitement de plan de bande passante (BWMAP) ; la soumission d'un domaine aval OAM de la couche physique (PLOAMd) à un module de gestion de l'état de l'unité de réseau optique (ONU) ; et la soumission d'une partie des données utiles de la trame GTC, de l'information sur la longueur concernant le PCBd et le comptage de supertrame à un module de traitement des données utiles de la trame GTC en aval ;
le module de traitement des données utiles de la trame GTC en aval étant configuré pour effectuer le filtrage et le déchiffrement d'une trame de procédé d'encapsulation du réseau optique passif gigabit (GEM) selon une liste de filtrage des identifiants de ports (Port-ID), une liste pour activer le chiffrement des identifiants Port-ID et une liste des clés des identifiants Port-ID délivrées par le module de gestion de l'état de l'unité ONU ; effectuer la séparation des données utilisateur et de l'information de gestion selon une liste des attributs des identifiants Port-ID délivrée par un module d'interface à bus parallèle externe ; effectuer le réassemblage du message Ethernet pour les identifiants Port-ID de chaque unité ONU ; et effectuer la transmission d'un message Ethernet selon une liste des mises en correspondance entre les identifiants Port-ID et l'interface matérielle délivrée par une unité centrale de traitement (CPU) via le module d'interface à bus parallèle externe ;
le module de gestion de l'état de l'unité ONU étant configuré pour répondre à un message PLOAMd et conserver l'information de l'état concernant chaque unité ONU ; répondre à une application d'enregistrement de la découverte de l'unité ONU du module de traitement BWMAP et générer un domaine amont OAM de la couche physique (PLOAMu) à envoyer à un module de verrouillage de la trame GTC en amont ; effectuer la configuration d'une liste de filtrage des identifiants d'attribution de la bande passante (Alloc-ID), une liste des mises en correspondance entre les identifiants Alloc-ID et les identifiants de l'unité ONU (ONU-ID), une liste de retard d'égalisation (EqD) entre le terminal de la ligne optique et l'unité ONU, la liste pour activer le chiffrement des identifiants Port-ID, la liste des clés des identifiants Port-ID et la liste de filtrage des identifiants Port-ID selon le message PLOAMd ;
le module de traitement BWMAP étant configuré pour effectuer le traitement du domaine BWMAP en amont de chaque unité ONU ; filtrer un domaine BWMAP qui n'appartient pas au présent système selon la liste de filtrage des identifiants Alloc-ID délivrée par le module de gestion de l'état de l'unité ONU ; obtenir les informations de commande de la trame GTC à envoyer au module de verrouillage de la trame GTC en amont selon la liste des mises en correspondance entre les identifiants Alloc-ID et les identifiants ONU-ID et la liste EqD délivrées par le module de gestion de l'état de l'unité ONU ; démarrer l'application d'enregistrement de la découverte de l'unité ONU sur le module de gestion de l'état de l'unité ONU ; démarrer une application pour générer un domaine amont de rapport de la bande passante dynamique (DBRu) sur un module de gestion de la file d'attente des messages Ethernet en amont ; et démarrer une application de verrouillage de la trame GEM sur un module de verrouillage de la trame GEM en amont ;
un module de traitement de message Ethernet en amont configuré pour effectuer la réception du message Ethernet depuis une interface Ethernet gigabit de chaque unité ONU, obtenir l'identifiant Port-ID et l'identifiant Alloc-ID auxquels ce message appartient selon l'information de configuration de l'unité centrale CPU envoyé par le module d'interface à bus parallèle externe et demander au module de gestion de la file d'attente des messages Ethernet en amont la mise en file d'attente du message selon l'identifiant Alloc-ID ;
le module de gestion de la file d'attente des messages Ethernet en amont étant configuré pour effectuer la gestion de la file d'attente de chaque identifiant Alloc-ID en amont ; effectuer la génération d'un rapport DBRu lorsque le module de traitement BWMAP demande le rapport DBRu; et traiter une application de mise en file d'attente d'un message de l'interface de commande et de gestion de l'unité ONU (OMCI) inséré par le module d'interface à bus parallèle externe ;
le module de verrouillage de la trame GEM en amont étant configuré pour effectuer le verrouillage de la trame GEM selon l'information sur la longueur concernant le domaine de la trame GEM donnée par le module de traitement BWMAP ;
le module de verrouillage de la trame GTC en amont étant configuré pour effectuer le processus de verrouillage de la trame GTC selon l'information de commande de la trame GTC et le message PLOAMu du module de gestion de l'état de l'unité ONU donnés par le module de traitement BWMAP ;
le module de commande de l'envoi de la trame GTC en amont étant configuré pour envoyer une trame GTC en amont selon le comptage d'horloge et de supertrame donné par le module de décodage de la ligne et de traitement PCBd ;
le module d'interface à bus parallèle externe étant configuré pour mettre à disposition une interface à une puce d'unité centrale CPU externe ; et mettre à disposition une interface de requête pour lire un état de chaque unité ONU à l'unité centrale CPU ; et
un module d'interface Ethernet gigabit configuré pour effectuer la transmission et la réception du message de l'interface Ethernet gigabit de chaque unité ONU.

2. Appareil selon la revendication 1, dans lequel le module de gestion de l'état de l'unité ONU comprend :
un module de filtrage et de vérification PLOAMd configuré pour effectuer la vérification et le filtrage du domaine PLOAMd en aval et soumettre un domaine PLOAMd filtré à un module de traitement de domaine PLOAMd pour sa gestion ;
le module de traitement du domaine PLOAMd étant configuré pour effectuer une rétroaction du domaine PLOAMd et effectuer un démarrage d'une application de migration de l'état sur un module de stockage de l'état de l'unité ONU ;
le module de stockage de l'état de l'unité ONU étant configuré pour effectuer le stockage de l'état de chaque unité ONU ; effectuer la migration de l'état de chaque unité ONU selon l'application de migration de l'état de l'unité ONU ; et démarrer un module de gestion de registre d'horloge selon les nouveaux et les anciens états de migration ;
le module de gestion de registre d'horloge étant configuré pour effectuer la surveillance de l'état de la télémétrie et la surveillance de l'état d'interruption de chaque unité ONU ; et
un module de génération PLOAMu configuré pour répondre à l'application d'enregistrement de la découverte de l'unité ONU initiée par le module de traitement BWMAP et générer un domaine PLOAMu approprié à envoyer au module de verrouillage de la trame GTC en amont.

3. Appareil selon la revendication 1, dans lequel le module de traitement des données utiles de la trame GTC en aval comprend :
un module de délimitation de la trame GEM configuré pour la recherche et la délimitation d'une trame GEM d'une partie des données utiles de la trame GTC en aval ;
un module de filtrage de la trame GEM configuré pour filtrer la trame GEM qui n'appartient pas au présent système selon la liste de filtrage des identifiants Port-ID délivrée par le module de gestion de l'état de l'unité ONU ;
un module de déchiffrement de la trame GEM configuré pour effectuer le déchiffrement de la trame GEM selon la liste pour activer le chiffrement des identifiants Port-ID et la liste des clés des identifiants Port-ID délivrées par le module de gestion de l'état de l'unité ONU ;
un module de détermination des identifiants Port-ID de la trame GEM configuré pour effectuer la séparation des données utilisateur et de l'information de gestion selon la liste des attributs des identifiants Port-ID délivrée par l'unité centrale CPU via le module d'interface à bus parallèle externe ; envoyer l'information de gestion à l'unité centrale CPU pour traitement via le module d'interface à bus parallèle externe ; et envoyer les données utilisateur à un module de réassemblage du message de la trame GEM pour traitement ;
le module de réassemblage du message de la trame GEM étant configuré pour effectuer le réassemblage du message Ethernet sur les données utilisateur dans une unité d'identifiants Port-ID ; et
un module d'acquisition de port matériel de message configuré pour rechercher un module d'interface Ethernet gigabit de destination correspondant à l'identifiant Port-ID du message selon la liste des mises en correspondance entre les identifiants Port-ID et l'interface matérielle délivrée par l'unité centrale CPU via le module d'interface à bus parallèle externe, et envoyer le message Ethernet via un module d'interface Ethernet gigabit de destination correspondant.

4. Appareil selon la revendication 1, dans lequel le module de traitement BWMAP est en outre configuré pour calculer si l'attribution de la bande passante de chaque unité ONU est attribuée de manière continue, et si elle est continue, pour indiquer au module de verrouillage de la trame GTC en amont de ne pas envoyer un domaine PLOu dans la trame GTC en amont correspondant au second domaine BWMAP en amont.

5. Appareillage selon la revendication 1, dans lequel le module de gestion de la file d'attente du message Ethernet en amont comprend :
un module de mise en file d'attente configuré pour recevoir le contenu d'un message, un identifiant Port-ID de message et un identifiant Alloc-ID de message envoyés par le module de traitement du message Ethernet en amont et une application de mise en file d'attente d'un message OMCI envoyé par le module d'interface à bus parallèle externe pour effectuer une opération de mise en file d'attente ;
un module de stockage de message configuré pour la gestion du stockage du message mis en file d'attente ;
un module de statistiques de la file d'attente configuré pour compter le nombre total d'octets de message stocké dans chaque file d'attente ;
un module de génération de rapport DBRu configuré pour, après avoir reçu une application de rapport DBRu envoyée par le module de traitement BWMAP, générer un rapport DBRu selon un résultat des statistiques du module de statistiques de la file d'attente et envoyer le rapport DBRu au module de verrouillage de la trame GTC en amont ; et
un module de retrait de la file d'attente configuré pour recevoir le contenu du message via le module de stockage de message selon une application de retrait du message de la file d'attente envoyé par un module de verrouillage de la trame GEM en amont et pour effectuer le retrait de la file d'attente selon le résultat des statistiques du module de statistiques de la file d'attente.

6. Appareil selon la revendication 5, dans lequel le module de stockage de message effectue le stockage du contenu du message via une puce de stockage externe et identifie que le contenu de l'information du message est stocké dans une file d'attente.

7. Appareil selon la revendication 1, dans lequel le module de verrouillage de la trame GTC en amont comprend :
une unité de verrouillage de la trame GTC configurée pour lire le domaine PLOAMu, le domaine de rapport DBRu et une trame GEM en amont selon l'information de commande GTC du module de traitement BWMAP, et pour ajouter un domaine PLOu pour effectuer le verrouillage de la trame GTC en amont ;
une unité de stockage de calcul de parité BIP configurée pour générer et stocker une parité par entrelacement de bits (BIP) de chaque trame GTC en amont ; et
une unité de codage FEC configurée pour effecteur le codage de la correction aval des erreurs de la trame GTC en amont et envoyer la trame GTC codée au module de commande d'envoi de la trame GTC en amont.

8. Appareil selon la revendication 4 ou 7, dans lequel, si l'information donnée par le module de traitement BWMAP indique qu'un créneau temporel d'un identifiant Alloc-ID suivant et une séquence de synchronisation du présent identifiant Alloc-ID sont connectés l'un à l'autre, alors le module de verrouillage de la trame GTC en amont doit lire le domaine de rapport DBRu et la trame GEM pendant le créneau temporel de l'identifiant Alloc-ID suivant mais n'a pas besoin de générer le domaine PLOu plus longtemps.

9. Appareil selon la revendication 1, dans lequel l'unité centrale CPU est configurée pour lire l'état de chaque unité ONU à partir du module de gestion de l'état de l'unité ONU via le module d'interface à bus parallèle externe ; le module de traitement du message Ethernet en amont est configuré pour lire une liste de règles d'obtention des identifiants Alloc-Id et Port-ID stockée par l'unité centrale CPU via le module d'interface à bus parallèle externe et obtenir l'identifiant Port-ID et l'identifiant Alloc-ID auxquels le message appartient selon cette liste.

10. Appareil selon la revendication 1, dans lequel l'unité centrale CPU est intégrée au module d'interface à bus parallèle externe.
